# DEMANDE DE BREVET EUROPEEN

(11) **EP 3 168 119 A1**
(43) Date de publication de la demande: **17.05.2017**
(21) Numéro de dépôt: 16198661.7
(22) Date de dépôt: 14.11.2016
(51) Int. Cl.: B62J 9/00

(54) **SYSTÈME DE FIXATION D'UN ARTICLE, NOTAMMENT UN ÉLÉMENT DE BAGAGERIE, SUR UN MOTOCYCLE**

(30) Priorité: 16.11.2015 FR 1560956
(71) Demandeur: TROPHY, 78420 Carrieres-sur-Seine (FR)
(72) Inventeur: ARRIBARD, Moïse, 13390 AURIOL (FR)
(74) Mandataire: Chevalier, Renaud Philippe

(57) **Abrégé**

Système de fixation (3) d'un article (4) sur un motocycle, comprenant des parties inférieure (1) et supérieure (2) prévues pour être fixées respectivement sur le motocycle et sur l'article, où :
- l'une des parties comprend une face périphérique externe (11) présentant un élément de butée (15) et au moins un verrou (134) fixe ;
- l'autre des parties comprend une face périphérique interne (22) présentant une fente (25) de réception propre à recevoir ledit élément de butée et supportant un dispositif de verrouillage (28) qui comprend au moins un pêne propre à coopérer avec un verrou correspondant et au moins un élément de rappel élastique ;
où, en position assemblée, la première partie est emboîtée à l'intérieur de la seconde partie avec lesdites faces périphériques et interne au moins partiellement jointives, l'élément de butée est engagé et bloqué à l'intérieur de la fente et le ou chaque pêne est en prise avec le verrou correspondant.

## Description

La présente invention se rapporte à un système de fixation d'un article sur un motocycle

Elle se rapporte plus particulièrement à un système de fixation d'un élément de bagagerie, tel qu'une sacoche ou un coffre de rangement de type top-case, sur un motocycle, et en particulier sur le bouchon du réservoir de carburant du motocycle, que ce dernier comprenne deux, trois ou quatre roues.

De manière classique, pour arrimer un article sur un réservoir de motocycle, il est connu d'employer un système de fixation comprenant une partie inférieure prévue pour être fixée sur le réservoir et une partie supérieure prévue pour être fixée sur l'article, ces parties inférieure et supérieure étant conformées pour être assemblées l'une à l'autre de façon détachable et bloquées ensemble dans une position assemblée.

Il est ainsi connu du document EP 1 634 802 d'employer un système de fixation comprenant une partie inférieure et une partie supérieure en forme de fer à cheval et dont les extrémités s'emboîtent l'une sur l'autre pour former une articulation pivotante. En plus d'être peu fiable en terme de tenue mécanique, ce système de fixation nécessite un centrage très précis des extrémités de la partie supérieure sur les extrémités de la partie inférieure lors de l'arrimage de l'article, étant précisé qu'une telle opération s'effectue nécessairement à l'aveugle du fait de l'article qui cache quasi-complètement le système de fixation.

Il est également connu du document EP 2 147 850 d'employer un système de fixation comprenant une partie inférieure et une partie supérieure en forme de couronne présentant des parois périphériques crénelées propres à coopérer ensemble par emboîtement vertical suivi d'un ancrage du type vissage par rotation de la partie supérieure. Ce système de fixation nécessite un centrage extrêmement précis de la partie supérieure sur la partie inférieure pour faire coïncider les créneaux lors de l'arrimage de l'article, étant rappelé que ce centrage s'effectue à l'aveugle à cause de l'article.

L'état de la technique peut également être illustré par le document DE 10 2009 052403 qui divulgue un système de fixation comprenant une partie inférieure en forme de « U » et une partie supérieure plus complexe qui comprend un casier fermé par un couvercle fixé sur l'article, ainsi qu'une mâchoire avant et une mâchoire arrière mobiles et sollicitées par des ressorts, ces mâchoires étant disposées à l'intérieur du casier. La partie supérieure comprend une face interne présentant deux fenêtres avant prévues pour laisser le passage à des crochets de la mâchoire avant, et deux fenêtres arrière prévues pour laisser le passage à des crochets de la mâchoire arrière. Un tel système est cependant relativement complexe, en mettant en oeuvre, pour la partie supérieure, deux organes mobiles, à savoir les mâchoires avant et arrière, le casier et le couvercle, sans compter les quatre ressorts.

Il est aussi connu, du document DE 20 2005 005470, d'employer un système de fixation comprenant une partie inférieure en forme de « U » et une partie supérieure en forme de « U », où la partie supérieure comprend des extrémités arrière qui s'emboîtent dans des extrémités arrière complémentaires de la partie inférieure pour réaliser une articulation pivotante la partie supérieure sur la partie inférieure. La partie supérieure supporte à l'avant un doigt de verrouillage sollicité par un organe élastique, et prévu pour se verrouiller dans un trou à l'avant de la partie inférieure. Ce système de fixation s'avère cependant peu fiable car susceptible de déboîtement au niveau de ces extrémités arrière, en particulier sur un motocycle soumis à de nombreuses et fortes vibrations.

La présente invention a pour but de résoudre en tout ou partie les inconvénients précités, en proposant un système de fixation qui permette notamment un assemblage des parties inférieure et supérieure, et donc un arrimage de l'article sur le motocycle, qui soient simples à réaliser, en particulier à l'aveugle, et qui soit stable et durable.

A cet effet, elle propose un système de fixation d'un article, notamment du type élément de bagagerie, sur un motocycle, ledit système de fixation comprenant une partie inférieure prévue pour être fixée sur le motocycle et une partie supérieure prévue pour être fixée sur l'article, lesdites parties inférieure et supérieure étant conformées pour être assemblées l'une à l'autre de façon détachable et verrouillées ensemble dans une position assemblée, ledit système de fixation étant remarquable en ce que :
- l'une des deux parties inférieure et supérieure, dite première partie, comprend une face périphérique externe présentant, sur une zone avant, un élément de butée et, sur une zone arrière, au moins un verrou fixe ;
- l'autre des deux parties inférieure et supérieure, dite seconde partie, comprend une face périphérique interne dans laquelle est ménagée, sur une zone avant, une fente de réception propre à recevoir ledit élément de butée et supportant, sur une zone arrière, un dispositif de verrouillage qui comprend au moins un pêne propre à coopérer avec un verrou correspondant et au moins un élément de rappel élastique, ledit dispositif de verrouillage étant mobile entre une position verrouillée dans laquelle le ou chaque pêne est en prise avec le verrou correspondant pour verrouiller les deux parties en position assemblée et une position déverrouillée autorisant un désassemblage des deux parties, ledit dispositif de verrouillage passant, d'une part, de la position verrouillée vers la position déverrouillée sous l'effet d'un effort de traction dirigé radialement vers l'extérieur de la seconde partie à l'encontre du ou de chaque élément de rappel élastique et, d'autre part, de la position déverrouillée vers la position verrouillée sous l'effet du ou de chaque élément de rappel élastique apte à solliciter ledit dispositif de verrouillage vers la position verrouillée et à exercer une poussée sur la première partie qui contraint ledit élément de butée à l'intérieur de la fente ;
   où, en position assemblée, la première partie est emboîtée à l'intérieur de la seconde partie avec la face périphérique externe de la première partie et la face périphérique interne de la seconde partie au moins partiellement jointives, l'élément de butée est engagé et bloqué à l'intérieur de la fente et le ou chaque pêne est en prise avec le verrou correspondant.

Ainsi, l'assemblage des deux parties se fait de manière aisée, il suffit de positionner l'élément de butée dans la fente et de verrouiller les parties avec le dispositif de verrouillage qui se déverrouille aisément en reculant radialement. Le maintien est stable avec une fente qui bloque l'élément de butée et avec le dispositif de verrouillage qui empêche l'élément de butée de ressortir de la fente.

Selon une caractéristique, le ou chaque pêne est disposé sensiblement en regard de la fente, et le passage du dispositif de verrouillage de la position verrouillée vers la position déverrouillée se traduit par un éloignement du ou chaque pêne vis-à-vis de ladite fente tandis que le passage du dispositif de verrouillage de la position déverrouillée vers la position verrouillée se traduit par un rapprochement du ou chaque pêne vis-à-vis de ladite fente.

Selon une autre caractéristique, dans lequel la première partie présente un bord inférieur et un bord supérieur bordant de part et d'autre la face périphérique externe, et présente, sur sa zone avant, une portion échancrée dans le bord inférieur de sorte que ladite zone avant présente sur la face périphérique externe un plateau avant suspendu, au-dessus de la portion échancrée, qui vient dans le prolongement du bord supérieur, ledit plateau avant formant l'élément de butée.

Dans une réalisation particulière, la face périphérique interne de la seconde partie présente, sur la zone avant, une portion avant de forme substantiellement complémentaire à la portion échancrée de la zone avant de la première partie, où la fente est prévue dans ladite portion avant.

Avantageusement, la face périphérique externe et la face périphérique interne sont au moins partiellement de formes tronconiques complémentaires, facilitant le guidage des deux parties lors de l'emboîtement.

Dans un mode de réalisation particulier, la première partie présente un plateau supérieur et la seconde partie présente une cavité de réception propre à recevoir intérieurement la première partie, ladite cavité étant délimitée par la face périphérique interne et par une paroi de fond présentant une face interne substantiellement plate, où, en position assemblée, ledit plateau supérieur est au moins partiellement en appui sur la face interne de ladite paroi de fond.

Selon une possibilité de l'invention, le plateau supérieur supporte au moins un aimant à proximité de l'élément de butée, et la paroi de fond supporte au moins un aimant complémentaire à proximité de la fente, lesdits aimants étant aptes à coopérer pour guider par aimantation la première partie à l'intérieur de la cavité de la seconde partie.

Ainsi, les aimants favorisent le guidage jusqu'à l'emboîtement des deux parties, le maintien en position assemblée étant quant à lui réalisé mécaniquement avec l'élément du butée dans la fente et le(s) pêne(s) coopérant avec le(s) verrou(s).

Selon une autre possibilité de l'invention, le plateau supérieur présente une conformation en gradin avec un gradin arrière et un gradin avant surélevé par rapport au gradin arrière, les deux gradins étant séparés par au moins une marche, où, en en position assemblée, ledit gradin avant est en appui sur ladite paroi de fond tandis que le gradin arrière est espacé de ladite paroi de fond avec la présence un interstice entre ledit gradin arrière et ladite paroi de fond.

Conformément à une autre caractéristique avantageuse de l'invention, le ou chaque aimant prévu sur le plateau supérieur est fixé sur le gradin avant.

La présente invention concerne également la caractéristique selon laquelle la ou chaque marche présente une encoche propre à coopérer avec un pêne du dispositif de verrouillage de sorte que la ou chaque encoche forme un verrou de la première partie, ledit dispositif de verrouillage s'étendant au moins partiellement à l'intérieur dudit interstice.

Selon une possibilité, le plateau supérieur présente une forme annulaire de sorte que le gradin avant se présente sous la forme d'un secteur de couronne et le gradin arrière se présente sous la forme d'un secteur complémentaire de couronne, de sorte que le gradin avant est séparé du gradin arrière par deux marches qui présentent chacune une encoche formant un verrou de la première partie.

Selon une autre possibilité, la première partie comprend au moins une rampe conformée pour, lors de l'emboîtement de la première partie à l'intérieur de la seconde partie, pousser le dispositif de verrouillage vers la position déverrouillée, à l'encontre du ou de chaque élément de rappel élastique, et pour guider le ou chaque pêne en direction du verrou correspondant, jusqu'à ce que le dispositif de verrouillage perde contact avec la ou chaque rampe et que le ou chaque pêne coopère avec le verrou correspondant, l'élément de butée étant positionné en face de la fente, et puis que le ou chaque élément de rappel élastique agisse sur la première partie et pousse l'élément de butée à l'intérieur de la fente.

Ainsi, grâce à cette ou ces rampes, toute l'opération d'assemblage se fait de manière séquentielle dans un seul et même mouvement d'emboîtement, et donc de manière très simple pour l'utilisateur.

Selon une caractéristique, la ou chaque rampe fait saillie du gradin avant au-dessus de la ou de chaque encoche, la ou chaque rampe présentant une pente descendante en direction de l'encoche afin de guider le ou chaque pêne du dispositif de verrouillage en direction de l'encoche correspondante.

Selon une autre caractéristique, la paroi de fond de la seconde partie présente au moins une fente propre à laisser le passage de la ou chaque rampe lorsque les deux parties sont en position assemblée.

Dans une réalisation particulière, la seconde partie présente un orifice de guidage traversant sa face périphérique interne et débouchant sur l'extérieur de ladite seconde partie, où le dispositif de verrouillage est monté et guidé à coulissement à l'intérieur dudit orifice de guidage.

Dans un mode de réalisation particulier, le dispositif de verrouillage comprend un ressort en forme de tige pliée présentant deux branches incurvées en forme de « V » jointes par un coude en forme de « U » et présentant chacune une portion d'extrémité montée sur la face périphérique interne de la seconde partie et une portion centrale reliée au coude, les portions d'extrémité desdites branches formant deux pênes propres à venir en prise avec deux verrous prévus sur la première partie, où lesdites branches sont aptes, d'une part, à se déformer élastiquement sous l'effet d'un effort de traction appliqué sur le coude et dirigé radialement vers l'extérieur de la seconde partie et, d'autre part, à revenir naturellement en position verrouillée en l'absence d'un tel effort de traction, lesdites branches formant les éléments de rappel élastique.

Selon une possibilité, les portions centrales des branches du dispositif de verrouillage sont montées et guidées à coulissement à l'intérieur de l'orifice de guidage.

Selon une autre possibilité, le système de fixation comprend en outre un lien, notamment un lien souple (tel qu'une cordelette, une sangle ou une chaîne), relié au dispositif de verrouillage et apte à être tiré manuellement pour faire passer ledit dispositif de verrouillage de la position verrouillée vers la position déverrouillée.

L'invention se rapporte également à un article, notamment du type sacoche ou élément de bagagerie, pour motocycle, ledit article intégrant un système de fixation conforme à l'invention, où la partie supérieure est fixée sur ledit article et est assemblée avec la partie inférieure dans la position assemblée, ladite partie inférieure étant prévue pour être fixée sur le motocycle.

D'autres caractéristiques et avantages de la présente invention apparaîtront à la lecture de la description détaillée ci-après, d'un exemple de mise en oeuvre non limitatif, faite en référence aux figures annexées dans lesquelles :
- la figure 1 est une vue schématique en perspective de dessous d'un article, du type sacoche, intégrant un système de fixation conforme à l'invention, illustré en position désassemblée ;
- la figure 2 est une vue schématique en perspective de dessous du système de fixation de la figure 1, illustré seul en position désassemblée ;
- la figure 3 est une vue schématique en perspective de dessous de l'article de la figure 1 avec le système de fixation en position assemblée ;
- la figure 4 est une vue schématique en perspective de dessous du système de fixation de la figure 1, illustré seul en position désassemblée et la vue étant prise selon angle d'observation différent de celui de la figure 2 ;
- la figure 5 est une vue schématique en perspective de dessus de l'article de la figure 1 avec le système de fixation en position désassemblée ,
- la figure 6 est une vue schématique en perspective de dessus du système de fixation de la figure 1, illustré seul en position désassemblée ,
- la figure 7 est une vue schématique en coupe longitudinale du système de fixation de la figure 1, illustré seul en position désassemblée ,
- la figure 8 est une vue schématique en coupe longitudinale du système de fixation de la figure 1, illustré seul en position assemblée ; et
- la figure 9 est une vue schématique de côté de l'article de la figure 1, avec le système de fixation illustré en coupe longitudinale et en position assemblée.

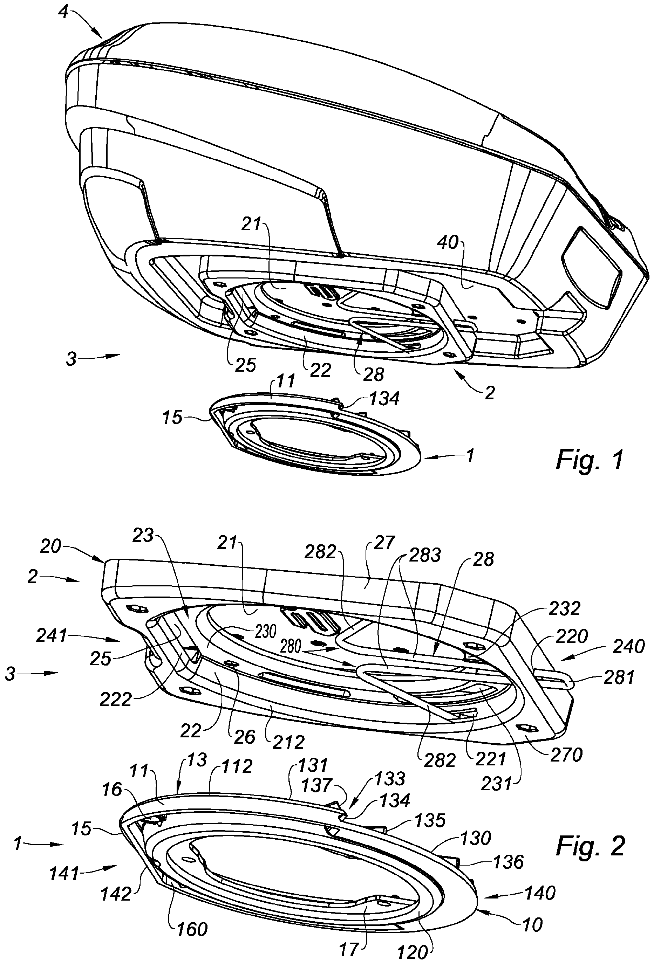

En référence aux figures 1, 3 et 5, un système de fixation 3, conforme à l'invention, est prévu pour assurer la fixation d'un article 4, en l'occurrence un élément de bagagerie tel qu'une sacoche de réservoir, sur un motocycle (non illustré), et plus particulièrement sur un réservoir de carburant du motocycle.

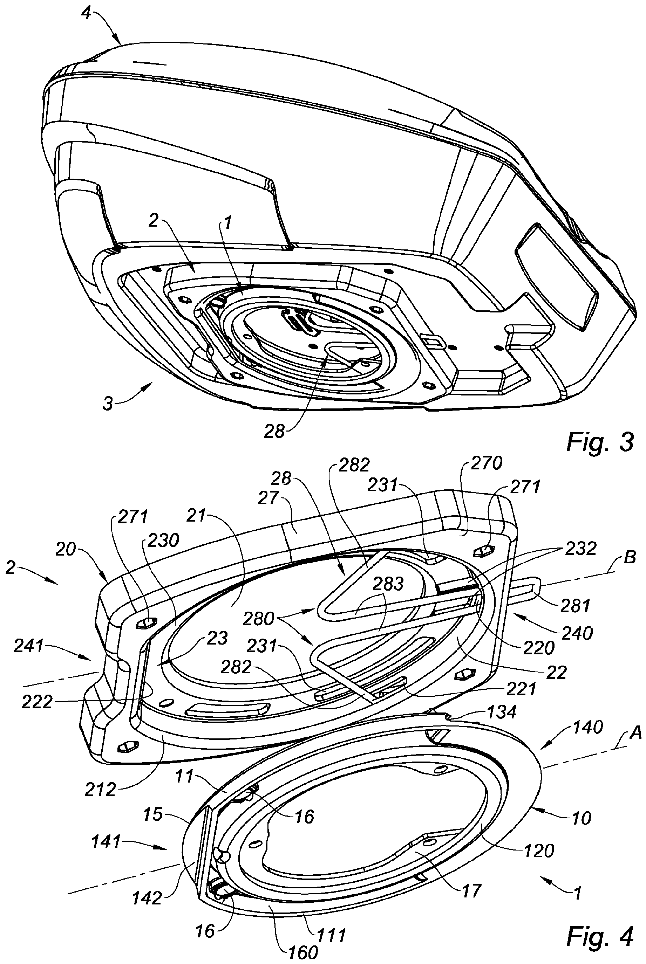

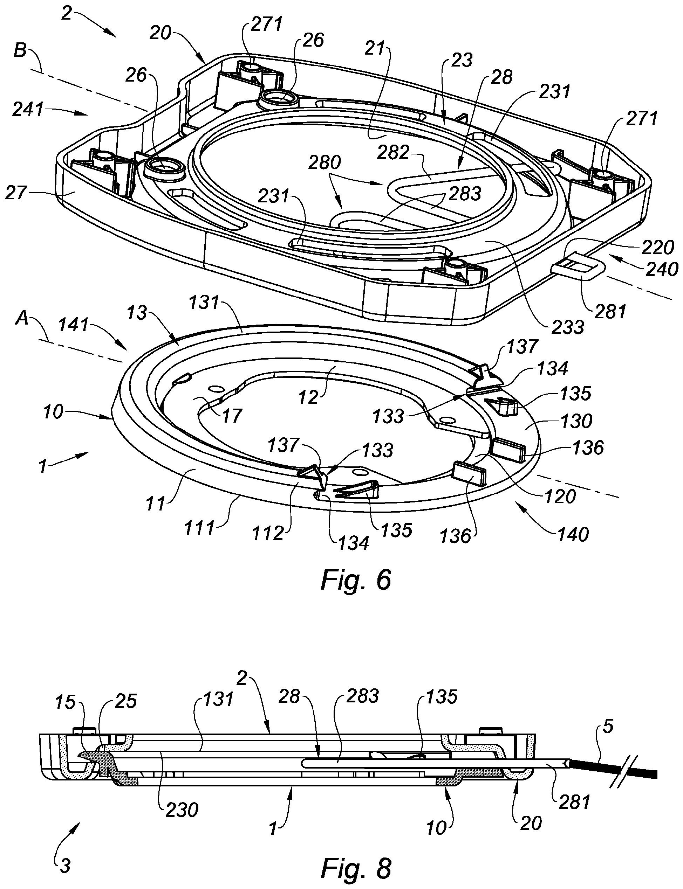

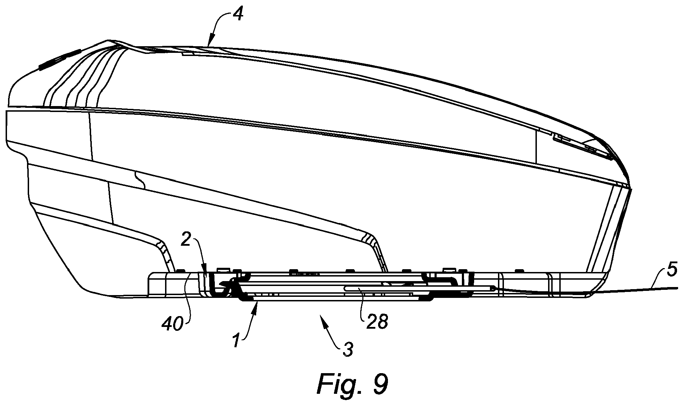

Ce système de fixation 3 comprend deux parties, à savoir une partie inférieure 1 et une partie supérieur 2, prévues pour être assemblées l'une à l'autre (ou l'une sur l'autre) de façon détachable (autrement dit amovible) et pour être verrouillées ensemble dans une position assemblée ; cette position assemblée étant visible sur les figures 3, 8 et 9.

La partie inférieure 1 est prévue pour être fixée sur le motocycle, et plus spécifiquement sur le bouchon (non illustré) du réservoir de carburant du motocycle. La partie supérieure 2 est quant à elle prévue pour être fixée sur l'article 4, et en particulier sur un fond rigide 40 de l'article 4.

La partie inférieure 1 comprend un corps 10 annulaire rigide en forme de couronne fermée, réalisée par exemple en matière plastique, et ayant un plan de symétrie vertical passant par un axe longitudinal A.

Ce corps 10 présente une face périphérique externe 11, une face périphérique interne 12 et un plateau supérieur 13 annulaire reliant les deux faces périphériques 11, 12. La face périphérique externe 11 est bordée en haut et en bas par respectivement un bord inférieur 111 et un bord supérieur 112, ce bord supérieur 112 s'étendant à la jonction entre la face périphérique externe 11 et le plateau supérieur 13.

Le plateau supérieur 13 forme le dessus du corps 10 et présente une forme générale annulaire. En outre, ce plateau supérieur 13 présente une conformation en gradin avec un gradin arrière 130 et un gradin avant 131 surélevé par rapport au gradin arrière 130. Le corps 10 est ainsi plus fin (ou moins haut) au niveau du gradin arrière 130 par rapport au gradin avant 131.

Le gradin avant 131 se présente sous la forme d'un secteur de couronne sur un angle supérieur à 180°, et le gradin arrière 130 se présente sous la forme d'un secteur complémentaire de couronne sur un angle complémentaire inférieur à 180°.

Les deux gradins 130, 131 sont séparés par deux marches 133, disposées de part et d'autre du plan de symétrie; chaque marche 133 présentant une encoche 134 ouverte sur le gradin arrière 130. Ces deux encoches 134 forment des verrous fixes pour le verrouillage de la partie supérieure 2 sur la partie inférieure 1, comme décrit ultérieurement.

Le gradin arrière 130 forme un secteur de couronne plat et horizontal, duquel font saillie :
- deux rampes inférieures 135, chaque rampe inférieure 135 étant placée en regard d'une marche 133, et donc d'une encoche 134, et présentant une pente descendante tournée en direction de la marche 133 concernée ; et
- deux cloisons 136 parallèles au plan de symétrie et intercalées entre les deux rampes inférieures 135.

Le gradin avant 131 forme un secteur de couronne plat et horizontal duquel fait saillie deux rampes supérieures 137 disposées au-dessus des encoches 134, autrement dit en surplomb des marches 133, chaque rampe supérieure 137 présentant une pente descendante en direction de l'encoche 134 concernée.

Au niveau du gradin arrière 130, le corps 10 est plein et présente une section radiale pleine. Au niveau du gradin avant 131, le corps 10 est creux ou ouvert sur le dessous et présente une section radiale en forme de « U ». Ainsi, le corps 10 présente une fente arquée 160 inférieure, en-dessous du gradin avant 131.

Le corps 10 présente une zone avant 141 et une zone arrière 140 opposées, avec les cloisons 136 prévues sur la zone arrière 140.

Sur la zone avant 141, le corps 10 présente une portion échancrée 142 dans le bord inférieur 111, de sorte que cette zone avant 141 présente sur la face périphérique externe 11 un plateau avant 15 suspendu, au-dessus de la portion échancrée 142, qui vient dans le prolongement du bord supérieur 112 et du gradin avant 131, ce plateau avant 15 formant ainsi un élément de butée en saillie de la face périphérique externe 11.

La face périphérique externe 11 présente une forme générale tronconique, sauf au niveau de la portion échancrée 142 ; avec une conicité orientée selon une réduction du diamètre en partant du bord inférieur 111 vers le bord supérieur 112. Le long du gradin avant 131, le bord supérieur 112 est biseauté ou arrondi.

Le plateau supérieur 13 supporte deux aimants 16, disposés de part et d'autre du plan de symétrie, à proximité du plateau avant 15. Ces aimants 16 sont montés sous le plateau supérieur 13, et plus spécifiquement sous le gradin avant 131, et sont donc placés à l'intérieur de la fente arquée 160.

Le corps 10 présente également un rebord interne 120 annulaire plat et horizontal, bordé par la face périphérique interne 12. La partie inférieure 1 comprend également une platine 17 d'ancrage, qui présente une forme générale en fer à cheval, qui est fixée sur le rebord interne 120, notamment par collage ou boulonnage. Cette platine 17 est munie de moyens de fixation sur le motocycle, et en particulier sur le bouchon du réservoir de carburant, comme par exemple des moyens de fixation par serrage, boulonnage, encliquetage, etc.

La partie supérieure 2 comprend un corps 20 annulaire rigide en forme de couronne fermée, réalisée par exemple en matière plastique, et ayant un plan de symétrie vertical passant par un axe longitudinal B. Lorsque la partie inférieure 1 et la partie supérieure 2 sont en position assemblée, cet axe longitudinal B est parallèle à l'axe longitudinal A et ce plan de symétrie est confondu avec le plan de symétrie du corps 10 de la partie inférieure 1.

Le corps 20 présente une cavité 21 de réception propre à recevoir intérieurement le corps 10 de la partie inférieure 1. Cette cavité 21 est délimitée par une face périphérique interne 22 et par une paroi de fond 23 annulaire.

Le corps 20 présente également une bordure périphérique 212 formant le pourtour externe de la cavité 21, qui prolonge la face périphérique interne 22 à l'opposé de la paroi de fond 23. Cette bordure périphérique 212 est biseautée ou arrondie.

Cette paroi de fond 23 présente une face interne 230 substantiellement plate et horizontale, et dans laquelle sont prévues deux fentes arrière 231 arquée, prévues pour permettre le passage des rampes supérieures 137 lors de l'assemblage des deux parties 1, 2.

Deux cloisons 232 parallèles au plan de symétrie font saillie de la face interne 230, à l'intérieur de la cavité 21, sur une zone arrière 240 du corps 20.

Le corps 20 présente un orifice de guidage 220 traversant la face périphérique interne 22, débouchant ainsi sur l'intérieur de la cavité 21 et sur l'extérieur du corps 20. Cet orifice de guidage 220 s'étend le long de l'axe longitudinal B et débouche juste en-dessous des deux cloisons 232.

Le corps 20 présente deux fentes 221 oblongues traversant la face périphérique interne 22, et prévues sensiblement au même niveau que les fentes arrière 231.

En face de l'orifice de guidage 220, sur une zone avant 241 du corps 20, une fente avant 25 est ménagée dans la face périphérique interne 22, débouchant ainsi sur l'intérieur de la cavité 21. Plus précisément, la face périphérique interne 22 présente, sur cette zone avant 241, une portion avant 222 de forme substantiellement complémentaire à la portion échancrée 142 de la zone avant 141 du corps 10 de la partie inférieure 1 ; la fente avant 25 étant prévue dans cette portion avant 222.

La face périphérique interne 22 présente une forme générale tronconique, sauf au niveau de la portion avant 222, complémentaire de la forme tronconique de la face périphérique externe 11 ; avec une conicité orientée selon une réduction du diamètre en partant de la bordure périphérique 212 vers la paroi de fond 23.

Le corps 20 comprend également une embase 27 présentant une face inférieure 270 dans laquelle est prévue en creux la cavité 21 ; cette embase 27 étant munie de moyens de fixation sur l'article 4, comme par exemple des moyens de fixation par vissage, boulonnage, encliquetage, etc. A titre d'exemple non limitatif, l'embase 27 supporte des écrous (non visibles) montés en force dans des trous 271, pour une fixation par boulonnage sur un fond rigide 40 de l'article 4.

La paroi de fond 23 supporte deux aimants 26, disposés de part et d'autre du plan de symétrie, à proximité de la fente avant 25. Ces aimants 26 sont montés sur le dessus de la paroi de fond 23, autrement dit sur sa face supérieure 233 opposée à la face inférieure 230.

La partie supérieure 2 comprend également un ressort 28 en forme de tige métallique pliée présentant deux branches 280 incurvées en forme de « V » jointes par un coude 281 en forme de « U ».

Chaque branche 280 présente deux portions 282, 283 rectilignes formant les deux ailes du « V » et donc inclinées l'une part à l'autre selon un angle inférieur à 90°, et de préférence inférieur à 60°, avec :
- une portion d'extrémité 282 présentant une extrémité libre montée sur la face périphérique interne 22, et plus spécifiquement montée et bloquée dans l'une des fentes 221 ; et
- une portion centrale 283 sensiblement parallèle à l'axe longitudinal B et reliée au coude 281.

Les deux portions centrales 283 sont montées et guidées à coulissement à l'intérieur de l'orifice de guidage 220, de sorte que le coude 281 est positionné sur l'extérieur du corps 20, tandis que les portions d'extrémité 282 s'étendent à l'intérieur de la cavité 21. En outre, ces portions centrales 283 s'étendent au moins partiellement entre les cloisons 232.

Les branches 280 sont aptes, d'une part, à se déformer élastiquement sous l'effet d'un effort de traction appliqué sur le coude 281 et dirigé radialement vers l'extérieur du corps 20 (autrement dit dirigé parallèlement à l'axe longitudinal B) et, d'autre part, à revenir naturellement en position de repos en l'absence d'un tel effort de traction, ces branches 280 formant ainsi des éléments de rappel élastique.

De manière fonctionnelle, le ressort 28 forme un dispositif de verrouillage monté sur la zone arrière 240 du corps 20 et qui comprend deux pênes, en l'occurrence les portions d'extrémité 282 des branches 280, propres à venir en prise avec les encoches 134 prévues dans les marches 133 du corps 10 de la partie inférieure 1.

Ce ressort 28 est mobile entre :
- une position verrouillée, dans laquelle le ressort 28 est verrouillée sur le corps 10 et dans laquelle les portions d'extrémité 282 des branches 280 (ou pênes) sont en prise avec les encoches 134 correspondantes pour verrouiller les deux parties 1, 2 en position assemblée ; et
- une position déverrouillée, dans laquelle le ressort 28 n'est pas verrouillée sur le corps 10 et dans laquelle les portions d'extrémité 282 des branches 280 (ou pênes) ne sont pas en prise avec les encoches 134 correspondantes, autorisant un désassemblage des deux parties 1, 2.

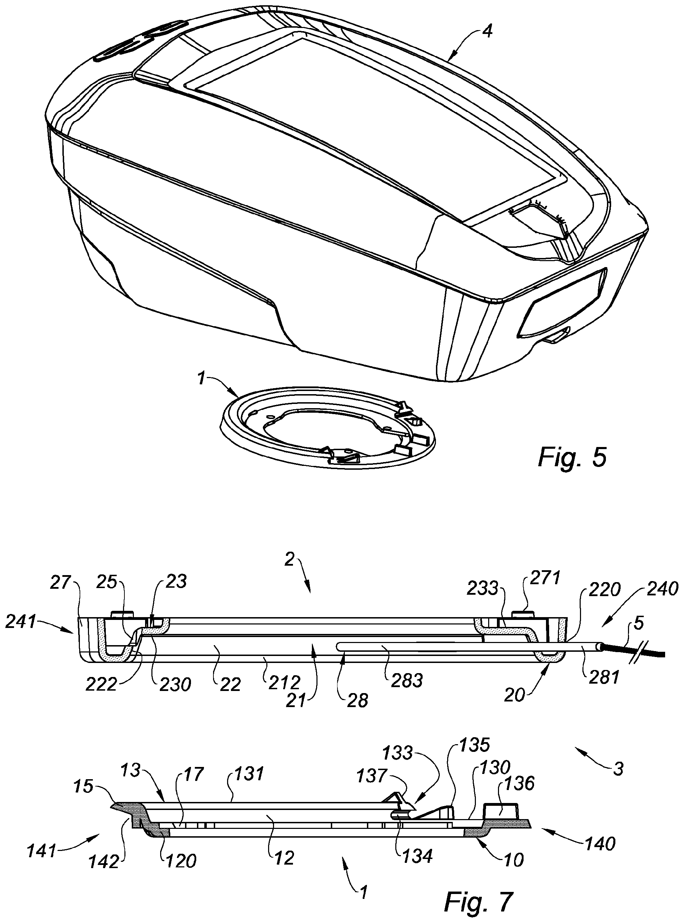

Ce ressort 28 passe de la position verrouillée vers la position déverrouillée sous l'effet d'un effort de traction exercé sur le coude 281 (notamment en tirant sur un lien 5 fixé sur le coude 281 et visible sur les figures 7 à 9) et dirigé radialement vers l'extérieur du corps 20, à l'encontre de l'effort de rappel élastique exercé par les branches 280.

Ce ressort 28 passe de la position déverrouillée vers la position verrouillée sous l'effet de l'effort de rappel élastique exercé par les branches 280, cet effort de rappel sollicitant naturellement le ressort 28 vers la position verrouillée et exerçant en outre une poussée sur le corps 10 qui contraint le plateau avant 15 à l'intérieur de la fente avant 25.

Il est à noter que les portions d'extrémité 282 des branches 280 sont disposées sensiblement en regard de la fente avant 25, et le passage du ressort 28 de la position verrouillée vers la position déverrouillée se traduit par un éloignement de ces portions d'extrémité 282 vis-à-vis de cette fente avant 25, tandis que le passage du ressort 28 de la position déverrouillée vers la position verrouillée se traduit par un rapprochement de ces portions d'extrémité 282 vis-à-vis de la fente avant 25.

La suite de la description porte sur l'assemblage des deux parties 1, 2 l'une sur l'autre.

Lors de l'assemblage, les deux parties 1, 2 sont rapprochées l'une de l'autre, en l'occurrence la partie supérieure 2 (solidaire de l'article 4) est rapprochée de la partie inférieure 1 fixée sur le motocycle.

Lors de ce rapprochement (ou emboîtement), les rampes supérieures 137 viennent en appui sur les portions d'extrémité 282 des branches 280 et viennent ainsi exercer un effort sur les branches 280 qui tend, de manière concomitante à :
- pousser le ressort 28 vers la position déverrouillée, à l'encontre de l'effort de rappel élastique exercé par les branches 280 ; et à
- guider ces portions d'extrémité 282 en direction des encoches 134 correspondantes ;
   jusqu'à ce que les branches 280 perdent contact avec les rampes supérieures 137 et que les portions d'extrémité 282 viennent en prise avec les encoches 134 correspondantes.

En parallèle, la bordure périphérique 212 du corps 20 vient en appui sur le bord supérieur 112 du corps 10, et ce corps 20 avance légèrement en glissant contre le bord supérieur 112, jusqu'à ce que le plateau avant 15 puisse passer (ou contourner) la portion avant 222 de la face périphérique interne 22 du corps 20, de sorte que le corps 20 s'enfonce et vient s'emboîter sur le corps 10 qui entre à l'intérieur de la cavité 21 du corps 20.

Cette avancée et cet enfoncement relatifs du corps 20 par rapport au corps 10 sont :
- concomitant à la déformation du ressort 28 sous l'effet des rampes supérieures 137 ;
- facilitées par les formes biseautées ou arrondies du bord supérieur 112 et de la bordure périphérique 212, ainsi que par les formes tronconiques de la face périphérique externe 11 du corps 10 et de la face périphérique interne 22 du corps 20 ;
- autorisées par la moindre épaisseur (ou hauteur) du gradin arrière 130 ; et
- guidées par les aimants 16, 26 qui attirent par magnétismes le corps 20 vers la position assemblée sur le corps 10.

Ainsi, à ce stade, le plateau avant 15 se situe en regard de la fente avant 25, le gradin avant 131 est en appui contre la face interne 230 de la paroi de fond 23, les portions d'extrémité 282 des branches 280 sont en prise avec les encoches 134 correspondantes, et ensuite le ressort 2 agit (concomitamment avec les aimants 16, 26) sur le corps 10, avec les branches 280 qui poussent le corps 10 et poussent ainsi le plateau avant 15 à l'intérieur de la fente avant 25, finalisant ainsi le verrouillage des deux parties 1, 2 en position assemblée.

Pour l'opérateur, il lui suffit de placer le corps 20 au-dessus du corps 10, puis d'appliquer un léger effort vers le bas, les aimants 16, 26 et le ressort 28 prenant automatiquement le relais pour assembler et bloquer (ou verrouiller) en position assemblée les deux parties 1, 2.

Dans la position assemblée :
- le corps 10 de la partie inférieure 1 est emboîtée à l'intérieur de la cavité 21 du corps 20 de la partie supérieure 2, avec la face périphérique externe 11 du corps 10 et la face périphérique interne 22 du corps 20 au moins partiellement jointives ;
- le plateau avant 15 est engagé et bloqué et bloquée à l'intérieur de la fente avant 25 ;
- les portions d'extrémité 282 des branches 280 du ressort 2 sont en prise avec les encoches 134 correspondantes ;
- le gradin avant 131 est en appui contre la face interne 230 de la paroi de fond 23 ;
- le gradin arrière 130 est espacé de la paroi de fond 23 avec la présence d'un interstice entre ce gradin arrière 130 et la face interne 230 de la paroi de fond 23, où les branches 280 s'étendent au moins partiellement à l'intérieur de cet interstice ;
- les portions centrales 283 des branches 280 s'étendent entre les cloisons 232 et entre les cloisons 136 ;
- les rampes inférieures 135 viennent sensiblement en butée contre la face interne 230 de la paroi de fond 23.

Lorsque l'opérateur souhaite désassembler les deux parties 1, 2, il lui suffit de tirer sur le lien 5 qui dépasse de l'article 4 et qui est donc accessible manuellement, conduisant ainsi à tirer sur le coude 281 du ressort 28. Cet effort tend à déformer les branches 280 du ressort 28, et à faire sortir les portions d'extrémité 282 hors des encoches 134 correspondantes, puis ces portions d'extrémité 282 montent sur les rampes inférieures 135, ce qui tend à faire basculer vers le haut l'arrière du corps 20 et à commencer à faire sortir le plateau avant 15 hors de la fente avant 25. Il ne reste ensuite plus qu'à faire avancer l'article 4 pour complètement désassembler les deux parties 1, 2.

Bien entendu l'exemple de mise en oeuvre évoqué ci-dessus ne présente aucun caractère limitatif et d'autres améliorations et détails peuvent être apportés au système de fixation selon l'invention, sans pour autant sortir du cadre de l'invention où d'autres formes de dispositif de verrouillage peuvent par exemple être réalisées en lieu et place du ressort 28.

## Revendications

1. Système de fixation (3) d'un article (4), notamment du type élément de bagagerie, sur un motocycle, ledit système de fixation (3) comprenant une partie inférieure (1) prévue pour être fixée sur le motocycle et une partie supérieure (2) prévue pour être fixée sur l'article (4), lesdites parties inférieure et supérieure (1, 2) étant conformées pour être assemblées l'une à l'autre de façon détachable et verrouillées ensemble dans une position assemblée, ledit système de fixation (3) étant **caractérisé en ce que** :
- l'une des deux parties inférieure et supérieure (1, 2), dite première partie (1), comprend une face périphérique externe (11) présentant, sur une zone avant (141), un élément de butée (15) et, sur une zone arrière (140), au moins un verrou (134) fixe ;
- l'autre des deux parties inférieure et supérieure (1, 2), dite seconde partie (2), comprend une face périphérique interne (22) dans laquelle est ménagée, sur une zone avant (241), une fente (25) de réception propre à recevoir ledit élément de butée (15) et supportant, sur une zone arrière (240), un dispositif de verrouillage (28) qui comprend au moins un pêne (283) propre à coopérer avec un verrou (134) correspondant et au moins un élément de rappel élastique (280), ledit dispositif de verrouillage (28) étant mobile entre une position verrouillée dans laquelle le ou chaque pêne (283) est en prise avec le verrou (134) correspondant pour verrouiller les deux parties (1, 2) en position assemblée et une position déverrouillée autorisant un désassemblage des deux parties (1, 2), ledit dispositif de verrouillage (28) passant, d'une part, de la position verrouillée vers la position déverrouillée sous l'effet d'un effort de traction dirigé radialement vers l'extérieur de la seconde partie (2) à l'encontre du ou de chaque élément de rappel élastique (280) et, d'autre part, de la position déverrouillée vers la position verrouillée sous l'effet du ou de chaque élément de rappel élastique (280) apte à solliciter ledit dispositif de verrouillage (28) vers la position verrouillée et à exercer une poussée sur la première partie (1) qui contraint ledit élément de butée (15) à l'intérieur de la fente (25) ;
où, en position assemblée, la première partie (1) est emboîtée à l'intérieur de la seconde partie (2) avec la face périphérique externe (11) de la première partie (1) et la face périphérique interne (22) de la seconde partie (2) au moins partiellement jointives, l'élément de butée (15) est engagé et bloqué à l'intérieur de la fente (25) et le ou chaque pêne (283) est en prise avec le verrou (134) correspondant.

2. Système de fixation (3) selon la revendication 1, dans lequel le ou chaque pêne (283) est disposé sensiblement en regard de la fente (25), et le passage du dispositif de verrouillage (28) de la position verrouillée vers la position déverrouillée se traduit par un éloignement du ou chaque pêne (283) vis-à-vis de ladite fente (25) tandis que le passage du dispositif de verrouillage (28) de la position déverrouillée vers la position verrouillée se traduit par un rapprochement du ou chaque pêne (283) vis-à-vis de ladite fente (25).

3. Système de fixation (3) selon les revendications 1 ou 2, dans lequel la première partie (1) présente un bord inférieur (111) et un bord supérieur (112) bordant de part et d'autre la face périphérique externe (11), et présente, sur sa zone avant (141), une portion échancrée (142) dans le bord inférieur (111) de sorte que ladite zone avant (141) présente sur la face périphérique externe (11) un plateau avant (15) suspendu, au-dessus de la portion échancrée (142), qui vient dans le prolongement du bord supérieur (112), ledit plateau avant (15) formant l'élément de butée.

4. Système de fixation (3) selon la revendication 3, dans lequel la face périphérique interne (22) de la seconde partie (2) présente, sur la zone avant (241), une portion avant (222) de forme substantiellement complémentaire à la portion échancrée (142) de la zone avant (141) de la première partie (1), où la fente (25) est prévue dans ladite portion avant (222).

5. Système de fixation (3) selon l'une quelconque des revendications précédentes, dans lequel la face périphérique externe (11) de la première partie (1) et la face périphérique interne (22) de la seconde partie (2) sont au moins partiellement de formes tronconiques complémentaires.

6. Système de fixation (3) selon l'une quelconque des revendications précédentes, dans lequel la première partie (1) présente un plateau supérieur (13) et la seconde partie (2) présente une cavité (21) de réception propre à recevoir intérieurement la première partie (1), ladite cavité (21) étant délimitée par la face périphérique interne (22) et par une paroi de fond (23) présentant une face interne (230) substantiellement plate, où, en position assemblée, ledit plateau supérieur (13) est au moins partiellement en appui sur la face interne (230) de ladite paroi de fond (23).

7. Système de fixation (3) selon la revendication 6, dans lequel le plateau supérieur (13) supporte au moins un aimant (16) à proximité de l'élément de butée (15), et la paroi de fond (23) supporte au moins un aimant (26) complémentaire à proximité de la fente (25), lesdits aimants (16, 26) étant aptes à coopérer pour guider par aimantation la première partie (1) à l'intérieur de la cavité (21) de la seconde partie (2).

8. Système de fixation (3) selon les revendications 6 ou 7, dans lequel le plateau supérieur (13) présente une conformation en gradin avec un gradin arrière (130) et un gradin avant (131) surélevé par rapport au gradin arrière (130), les deux gradins (130, 131) étant séparés par au moins une marche (133), où, en en position assemblée, ledit gradin avant (131) est en appui sur ladite paroi de fond (23) tandis que le gradin arrière (130) est espacé de ladite paroi de fond (23) avec la présence d'un interstice entre ledit gradin arrière (130) et ladite paroi de fond (23).

9. Système de fixation (3) selon les revendications 7 et 8, dans lequel le ou chaque aimant (16) prévu sur le plateau supérieur (13) est fixé sur le gradin avant (131).

10. Système de fixation (3) selon les revendications 8 ou 9, dans lequel la ou chaque marche (133) présente une encoche (134) propre à coopérer avec un pêne (283) du dispositif de verrouillage (28) de sorte que la ou chaque encoche (134) forme un verrou de la première partie (1), ledit dispositif de verrouillage (28) s'étendant au moins partiellement à l'intérieur dudit interstice.

11. Système de fixation (3) selon la revendication 10, dans lequel le plateau supérieur (13) présente une forme annulaire de sorte que le gradin avant (131) se présente sous la forme d'un secteur de couronne et le gradin arrière (130) se présente sous la forme d'un secteur complémentaire de couronne, de sorte que le gradin avant (131) est séparé du gradin arrière (130) par deux marches (133) qui présentent chacune une encoche (134) formant un verrou de la première partie (1).

12. Système de fixation (3) selon l'une quelconque des revendications précédentes, dans lequel la première partie (1) comprend au moins une rampe (137) conformée pour, lors de l'emboîtement de la première partie (1) à l'intérieur de la seconde partie (2), pousser le dispositif de verrouillage (28) vers la position déverrouillée, à l'encontre du ou de chaque élément de rappel élastique (280), et pour guider le ou chaque pêne (283) en direction du verrou (134) correspondant, jusqu'à ce que le dispositif de verrouillage (28) perde contact avec la ou chaque rampe (137) et que le ou chaque pêne (283) coopère avec le verrou (134) correspondant, l'élément de butée (15) étant positionné en face de la fente (25), et puis que le ou chaque élément de rappel élastique (280) agisse sur la première partie (1) et pousse l'élément de butée (15) à l'intérieur de la fente (25).

13. Système de fixation (3) selon les revendications 10 et 12, dans lequel la ou chaque rampe (137) fait saillie du gradin avant (131) au-dessus de la ou de chaque encoche (134), la ou chaque rampe (137) présentant une pente descendante en direction de l'encoche (134) afin de guider le ou chaque pêne (283) du dispositif de verrouillage (28) en direction de l'encoche (134) correspondante.

14. Système de fixation (3) selon les revendications 6 et 12, dans lequel la paroi de fond (23) de la seconde partie (2) présente au moins une fente (231) propre à laisser le passage de la ou chaque rampe (137) lorsque les deux parties (1, 2) sont en position assemblée.

15. Système de fixation (3) selon l'une quelconque des revendications précédentes, dans lequel la seconde partie (2) présente un orifice de guidage (220) traversant sa face périphérique interne (22) et débouchant sur l'extérieur de ladite seconde partie (2), où le dispositif de verrouillage (28) est monté et guidé à coulissement à l'intérieur dudit orifice de guidage (220).

16. Système de fixation (3) selon l'une quelconque des revendications précédentes, dans lequel le dispositif de verrouillage comprend un ressort (28) en forme de tige pliée présentant deux branches (280) incurvées en forme de « V » jointes par un coude (281) en forme de « U » et présentant chacune une portion d'extrémité (282) montée sur la face périphérique interne (22) de la seconde partie (2) et une portion centrale (283) reliée au coude (281), les portions d'extrémité (282) desdites branches (280) formant deux pênes propres à venir en prise avec deux verrous (134) prévus sur la première partie (1), où lesdites branches (280) sont aptes, d'une part, à se déformer élastiquement sous l'effet d'un effort de traction appliqué sur le coude (281) et dirigé radialement vers l'extérieur de la seconde partie (2) et, d'autre part, à revenir naturellement en position verrouillée en l'absence d'un tel effort de traction, lesdites branches (280) formant les éléments de rappel élastique.

17. Système de fixation (3) selon les revendications 15 et 16, dans lequel les portions centrales (283) des branches (280) du dispositif de verrouillage (28) sont montées et guidées à coulissement à l'intérieur de l'orifice de guidage (220).

18. Système de fixation (3) selon l'une quelconque des revendications précédentes, comprenant en outre un lien (5), notamment un lien souple, relié au dispositif de verrouillage (28) et apte à être tiré manuellement pour faire passer ledit dispositif de verrouillage (28) de la position verrouillée vers la position déverrouillée.

19. Article (4), notamment du type sacoche ou élément de bagagerie, pour motocycle, ledit article (4) intégrant un système de fixation (3) conforme à l'une quelconque des revendications précédentes, où la partie supérieure (2) est fixée sur ledit article (4) et est assemblée avec la partie inférieure (1) dans la position assemblée, ladite partie inférieure (1) étant prévue pour être fixée sur le motocycle.
